# EUROPÄISCHE PATENTANMELDUNG

(11) **EP 4 177 228 A1**
(43) Veröffentlichungstag der Anmeldung: **10.05.2023**
(21) Anmeldenummer: 22199635.8
(22) Anmeldetag: 04.10.2022
(51) Int. Cl.: C03C 25/70, B08B 3/00, B08B 3/08, B08B 3/10, B09B 3/00, B09B 3/38, B09B 3/40, B09B 3/45, B09B 3/60, B09B 3/65

(54) **VERFAHREN UND VORRICHTUNG ZUM REINIGEN VON MIT ORGANISCHEN STOFFEN BEHAFTETEN GEBRAUCHTEN FASERWERTSTOFFEN**

(30) Priorität: 04.11.2021 DE 102021128758
(71) Anmelder: DFM IP B.V., 6222 NS Maastricht (NL)
(72) Erfinder: Mödinger, Fritz, 73035 Göppingen (DE); Fehlhaber, Thomas, 82399 Raisting (DE); Devilée, Philippe, 6211 PA Maastricht (NL); Tirler, Werner, 39012 Meran (IT)
(74) Vertreter: Schlimme, Wolfram

(57) **Zusammenfassung**

Ein Verfahren zum Reinigen von zumindest mit organischen Stoffen behafteten gebrauchten Faserwertstoffen, wobei die mit Wasser oder einem Wasser enthaltenden Fluid vermischten Faserwertstoffe in einem Hydrothermalreaktor (14; 114; 214) erhitzt werden, ist gekennzeichnet durch die folgenden Schritte:
a) Zuführen eines Wertstoffstroms (W) von künstlich erzeugte Mineralfasern aufweisenden Faserwertstoffen zu einer Zerkleinerungseinrichtung (10);
b) Zerkleinern der Faserwertstoffe des Wertstoffstroms (W);
c) Vermischen der zerkleinerten Faserwertstoffe mit dem Wasser oder mit dem Wasser enthaltenden Fluid zu einer fließfähigen Pulpe;
d) Beaufschlagen der Pulpe mit thermischer Energie unter Überdruck für einen vorgegebenen Zeitraum;
e) Entspannen des Überdrucks auf Umgebungsdruck und Abführen des dabei entstehenden Dampfes.

## Beschreibung

### TECHNISCHES GEBIET

Die vorliegende Erfindung betrifft ein Verfahren zum Reinigen von mit organischen Stoffen behafteten gebrauchten Faserwertstoffen. Damit können künstlich erzeugte Mineralfasern oder Mineralfaserpartikel aus gebrauchten Faserwertstoffen in hoher Reinheit herausgelöst und wiedergewonnen werden, so dass die Erfindung auch ein Recyclingverfahren zur Rückgewinnung von künstlich erzeugten Mineralfasern oder Mineralfaserpartikeln aus gebrauchten Faserwertstoffen betrifft. Die Erfindung betrifft weiterhin eine Vorrichtung zum Reinigen von mit organischen Stoffen behafteten gebrauchten Faserwertstoffen, also eine Vorrichtung zur Durchführung eines solchen Recyclingverfahrens.

### HINTERGRUND DER ERFINDUNG

Künstlich erzeugte Mineralfasern (KMF) werden aus mineralischen Schmelzen mittels unterschiedlicher Düsen- oder Schleuderverfahren produziert. Künstlich erzeugte Mineralfasern werden häufig als Wärmeisolationsmittel in der Baustoffindustrie eingesetzt oder kommen als Lichtleiter in der Datenübertragung zur Anwendung.

Mineralfasern können unter Umständen als gesundheitsgefährliche Substanz eingestuft werden. Einerseits bezieht sich diese Einstufung auf geometrische Eigenschaften und umfasst Fasern mit einer Faserlänge (FL) > 5 µm und einem Faserdurchmesser (FD) < 3 µm sowie einem Verhältnis FL/FD > 3:1. Andererseits wird die sogenannte Biopersistenz, auch als Biobeständigkeit bezeichnet, als Kriterium für die Einstufung herangezogen, die die Eigenschaft der Fasern beschreibt, im menschlichen Körper zu verbleiben, anstatt aus diesem ausgetragen zu werden. Diese Biobeständigkeit ist umso höher, je schlechter sich die Fasern in der Lungenflüssigkeit auflösen oder andere Reinigungsprozesse des Körpers wirksam werden können.

Jährlichen fallen allein im Gebiet der Bundesrepublik Deutschland künstlich erzeugte Mineralfasern als Abfall in einer Menge von mehr als 150.000 Tonnen in Form von gefährlichen und ungefährlichen KMF-Abfällen an. Als ungefährliche KFM-Abfälle werden nicht biopersistente künstlich erzeugte Mineralfasern und solche künstlich erzeugten Mineralfasern bezeichnet, die gemäß der oben bereits aufgeführten Einstufung einen Faserdurchmesser (FD) kleiner als 3 µm und eine Faserlänge (FL) größer als 5 µm aufweisen und bei denen das Verhältnis der Faserlänge zum Faserdurchmesser (FL/FD) mindestens 3:1 beträgt. Weichen sie von diesen Parametern ab, dann gelten sie entweder als nicht gefährlich oder als Partikel und somit ebenfalls als nicht gefährlich. Alle anderen künstlich erzeugten Mineralfasern gelten gemäß einer Definition der Weltgesundheitsorganisation WHO (IARC - International Agency for Research on Cancer, 'Man-made Vitreous Fibres', IARC Monographs on the Evaluation of Carcinogenic Risks to Humans, Vol. 81,2002) als gefährlich. Biopersistente Fasern dürfen in der EU im Bausektor seit 1998 nicht mehr verwendet werden. Keramikfasern, die beispielsweise bei der Isolierung von Öfen, eingesetzt werden, und Lichtleiter sind jedoch nach wie vor biopersistent.

Die häufigsten gesundheitlichen Beeinträchtigungen durch künstlich erzeugte Mineralfasern sind Reizungen durch Einspießen größerer Fasern. Kleinere Fasern und Feinstaub, der durch Zerbrechen der Fasern entsteht, können bis tief in den menschlichen Körper gelangen. Ob sie dort die Möglichkeit haben, schwerwiegende Schädigungen hervorzurufen, hängt insbesondere von der Dauer und Stärke der Faserexposition, der Geometrie, den Dimensionen (Länge und Durchmesser) der einzelnen Fasern und deren Biopersistenz ab.

Zwar wurde 1998 in einigen Ländern die chemische und mineralogische Zusammensetzung von Mineralfasern geändert, um eine bessere Biolöslichkeit zu erzielen, doch lässt sich der künstlich erzeugte Mineralfasern enthaltende Bauschutt nicht in (neue) biolösliche und (alte) nicht mit ausreichender Zuverlässigkeit biolösliche künstlich erzeugte Mineralfasern trennen. Das hat zur Folge, dass künstlich erzeugte Mineralfasern enthaltender Bauschutt vorsorglich stets als umweltbedenklich einzustufen ist und deponiert wird. Es ist daher anzustreben, künstlich erzeugte Mineralfasern enthaltenden Abfall so aufzubereiten, dass er für den Menschen biologisch unschädlich wird.

Bei der das Gebiet der Erfindung betreffenden Behandlung von künstlich erzeugten Mineralfasern muss im Hinblick auf ein Recycling der künstlich erzeugten Mineralfasern zwischen einer betriebsinternen oder betriebsnahen Wiederverwertung von neuen Mineralfasern und einer Wiederverwertung von zurückgebauten Mineralfasern enthaltenden Stoffen unterschieden werden. Bei der betriebsinternen oder betriebsnahen Wiederverwertung handelt es sich vorwiegend um reine Mineralfasern, beispielsweise in Form von Mineralwolle, die im entsprechenden Produktionsprozess anfallen. Es handelt sich dabei um Faserabschnitte, die beispielsweise bei der Herstellung von Isoliermatten durch Zuschnitt anfallen, um überlagerte Ware oder um Ausschuss. Bei diesen künstlich erzeugten Mineralfasern kann es sich um mit Bindern behaftete Fasern oder um "reine" Fasern handeln. Hingegen sind zurückgebaute Stoffe mit künstlich erzeugten Mineralfasern verarbeitete Produkte oder Bauschutt. Die meisten dieser zur Wiederverwertung anstehenden Stoffen enthalten aus technischen Gründen auch Fremdstoffe wie beispielsweise organische oder anorganische Binder und Kleber oder um Kaschierungen. Darüber hinaus können viele Produkte, beispielsweise mit Isoliermaterial gefüllte Wärmedämmziegel, nicht einfach und sortenrein in ihre Komponenten zerlegt werden.

Außer dieser Behandlung im Hinblick auf ein Recycling kann es auch erforderlich sein, neue künstlich erzeugte Mineralfasern für die weitere Verarbeitung so vorzubehandeln, dass die Fasern zu mechanisch ungefährlichen Partikeln werden, die dann weiterverarbeitet werden können.

Künstliche Mineralfasern (KMF), umgangssprachlich als Glaswolle, Steinwolle, Mineralwolle, Kamilit oder Kamelit bezeichnet, finden als Dämmmaterial, in Textilien, als Verstärkung von Kunststoffen und als Lichtleitfasern Verwendung. Andere für das Verfahren geeignete mineralische Substrate sind beispielsweise Schlackefasern. Alle diese Stoffe können Faserwertstoffe im Sinne der vorliegenden Anmeldung bilden.

Bei der Herstellung derartige Faserwertstoffe aufweisender Produkte, insbesondere bei der Herstellung von aus Glaswolle oder Mineralwolle bestehenden Isoliermatten oder -platten und daraus gebildeten Bauteilen oder von Akustikplatten, werden künstliche Mineralfasern mittels eines auch als Binder bezeichneten synthetischen oder nicht-synthetischen organischen Bindemittels, beispielsweise eines Phenol-Formaldehyd-Harnstoff-Bindemittels oder auch eines Zucker oder Stärke aufweisenden Bindemittels, verarbeitet, um die mineralischen Substrate, beispielsweise einzelne Mineralfasern, aneinander zu binden. So wird zum Beispiel bei der Herstellung von gebundenen Mineralwolleprodukten aus einer Schmelze im Anschluss an die Zerfaserung der Schmelze ein solches organisches Bindemittel, beispielsweise ein Bindemittel auf Phenol-Formaldehyd-Harzbasis, auf die noch heißen Fasern aufgebracht. Zum Beispiel wird ein mit einem Phenol-Formaldehydharz-Bindemittel versetztes Phenol-Formaldehydharz in Form einer wässrigen Dispersion auf die Fasern aufgesprüht. Der Phenol-Formaldehydharz-Bindemittel polymerisiert aufgrund der noch hohen Temperaturen der Fasern auf der Faseroberfläche und verbindet, insbesondere an Kreuzungspunkten von Fasern, die Fasern miteinander.

Die bekanntesten synthetischen Bindemittel, die bei der Herstellung von geformten, nicht gewebten Mineralfaserprodukten verwendet werden, sind die so genannten PFU-Bindemittel (Phenol-Formaldehyd-Harnstoff-Bindemittel). Neben den Hauptkomponenten des Phenol-Formaldehyd-Harzes können die Bindemittel in geringen Mengen auch noch Ammoniumhydroxid, Ammoniumsulfat, Silan, Emulgator, Entstaubungsöl, Streckmittel und Wasser enthalten. Diese synthetischen Bindemittel unterliegen einer Alterung, die zu einem Anstieg der Kohlenstoffkonzentration und einer Abnahme der Konzentration von Elementen wie Stickstoff, Sauerstoff, Schwefel und Aluminium auf der Faseroberfläche führt. Auch Zucker und Stärke sind typische organische Stoffe, auf denen geeignete nichtsynthetische (natürliche) Bindemittel basieren.

Wertstoffe, beispielsweise Abfallprodukte, Ausschussprodukte oder Überschussprodukte, die aus derartigen künstliche Mineralfasern aufweisenden Produkten resultieren, können - insbesondere bei Abfallprodukten - nach international gültigen Konventionen der WHO als ungefährlich oder als gefährlich eingestuft sein. Die gefährlichen Wertstoffe sind aufwändig zu behandeln, um die als physiologisch bedenklich eingestuften künstlichen Mineralfasern daraus zu isolieren und einem Weiterverarbeitungsprozess zuzuführen, in dem die als gefährlich eingestuften künstlichen Mineralfasern zu physiologisch unbedenklichen Stoffen vermahlen oder geschmolzen werden. Die als nicht gefährlich eingestuften künstlichen Mineralfasern können unmittelbar einer Weiterverarbeitung zugeführt werden. Für derartige Weiterverarbeitungsprozesse ist es erforderlich, die künstlichen Mineralfasern zunächst von anderen Wertstoffen zu trennen und zu befreien. Es verbleiben danach jedoch die Kunstharz-Anhaftungen an den Mineralfasern, die einer sortenreinen Weiterverwendung der als nicht gefährlich eingestuften Mineralfasern im Wege stehen. Gefährliche Mineralfasern können nach einer entsprechenden Aufbereitung einer allgemeinen Weiterverwendung zugeführt werden.

### STAND DER TECHNIK

Die EP 0 747 126 A beschreibt ein Verfahren und eine Vorrichtung zur Aufbereitung von Faserbestandteile und Fremdbestandteile einschließlich Kaschierungsmaterial, insbesondere von Alt-Mineralfasern. Das Verfahren beruht auf dem Einsatz einer Hochdruckwalzenschüsselmühle zur Zerkleinerung und einer Mehrzahl von Siebeinrichtungen zum Zweck der Siebklassierung.

Die DE 10 2012 218 878 A beschreibt ein Verfahren zum Recycling von Mineralwolleabfällen in welchem diese in eine Prozesskammer eingeführt werden und mittels Durchmischung unter thermischer Behandlung in eine Schmelze überführt werden. Bei diesem Verfahren ist die vorherige gesonderte Abtrennung von Kaschierungsmaterialien erforderlich.

In der US 5 100 453 A wird ein Verfahren zum Recycling von Mineralfasern mit einer thermischen Behandlung von anhaftenden organischen Verunreinigungen beschrieben.

Aus der US 2008 / 0302136 A1 ist ein Verfahren zum Entfernen von organischer Beschichtung oder Binder von Glasfasern bekannt, bei welchen die kontaminierten Glasfasern in einen hydrothermalen Reaktor gegeben werden, in den ein wasserbasiertes Fluid unter Druck eingeleitet wird. Anschließend wird der Rektor aufgeheizt. Der Reaktor kann mehrere Mischer enthalten. Das wasserbasierte Fluid kann Dampf enthalten. Die nach der Behandlung aus dem Reaktor austretenden, im Wesentlichen unbeschädigten Glasfasern werden anschließend zu einer Matte geformt, weshalb die Behandlung im Reaktor schonend erfolgen muss.

### DARSTELLUNG DER ERFINDUNG

Aufgabe der vorliegenden Erfindung ist es, ein gattungsgemäßes Verfahren so zu verbessern, dass die wiedergewonnenen Faseranteile für Menschen biologisch unschädlich sind, und eine entsprechende Vorrichtung zur Durchführung des Verfahrens anzugeben.

Der auf das Verfahren gerichtete Teil der Aufgabe wird gelöst durch ein Verfahren mit den Merkmalen des Anspruchs 1.

Ein Verfahren zum Reinigen von zumindest mit organischen Stoffen behafteten gebrauchten Faserwertstoffen, wobei die mit Wasser oder einem Wasser enthaltenden Fluid vermischten Faserwertstoffe in einem Hydrothermalreaktor erhitzt werden, weist die folgenden Schritte auf:
a) Zuführen eines Wertstoffstroms von künstlich erzeugte Mineralfasern aufweisenden Faserwertstoffen zu einer Zerkleinerungseinrichtung;
b) Zerkleinern der Faserwertstoffe des Wertstoffstroms;
c) Vermischen der zerkleinerten Faserwertstoffe mit dem Wasser oder mit dem Wasser enthaltenden Fluid zu einer fließfähigen Pulpe;
d) Beaufschlagen der Pulpe mit thermischer Energie unter Überdruck für einen vorgegebenen Zeitraum;
e) Entspannen des Überdrucks auf Umgebungsdruck und Abführen des dabei entstehenden Dampfes.

### VORTEILE

Dieses Verfahren zum Reinigen von gebrauchten Faserwertstoffen ermöglicht es, künstlich erzeugte Mineralfasern enthaltende Faserwertstoffe, die beispielsweise aus gebrauchten Wärmedämmplatten oder gebrauchten Wärmeisoliermaterialien, die bei Abbrucharbeiten oder beim Rückbau von Gebäuden gewonnen wurden, oder die aus in der Landwirtschaft eingesetzten Fasermatten stammen, so zu recyceln, dass die Mineralfasern aus den Faserwertstoffen herausgelöst werden, um sie dann später beispielsweise von im Wertstoffstrom noch enthaltenen Störstoffen separieren und zu reinigen und gegebenenfalls weiterverarbeiten zu können.

Im Schritt b) werden insbesondere auch nicht-organische Störstoffe, beispielsweise an den Faserwertstoffen anhaftende Mörtelreste oder Kaschiermaterial, so zerkleinert, dass sie in der im Schritt c) gebildeten und nachstehend als Pulpe bezeichneten Suspension keine groben mechanischen Rückstände ausbilden, sondern als Schwemmstoffe in der Pulpe aufgenommen sind. Zur Abtrennung von gröberen Störstoffen können die gröberen Störstoffe nach dem Schritt b) optional in einem Schritt b') von den Faserwertstoffen separiert werden, was beispielsweise mittels zumindest einer mechanischen Separationseinrichtung erfolgt.

Im Schritt b) erfolgt vorzugsweise ein Auffasern der Mineralfaseranteile. Vorteilhaft ist es, wenn die Vermischung der zerkleinerten Faserwertstoffe mit dem Wasser oder dem Wasser enthaltenden Fluid zu einer fließfähigen Pulpe im Schritt c) in einer Mischeinrichtung erfolgt. Das Transportfluid kann im Schritt c) vorzugsweise auch im dampfförmigen Zustand mit den zerkleinerten Wertstoffen vermischt werden. Vorzugsweise ist das im Schritt c) eingesetzte Transportfluid demineralisiertes Wasser oder das Transportfluid weist zumindest demineralisiertes Wasser auf. Im Schritt d) wird die Pulpe für einen vorgegebenen Zeitraum unter Überdruck mit thermischer Energie beaufschlagt.

Weitere bevorzugte und vorteilhafte Ausgestaltungsmerkmale des erfindungsgemäßen Verfahrens sind Gegenstand der Unteransprüche 2 bis 14.

Gemäß einer besonders bevorzugten Ausführungsform folgt auf den Schritt e) ein weiterer Verfahrensschritt
f) Abschrecken der Pulpe durch Schockabkühlung mittels eines in die Pulpe eingeleiteten kalten Spülfluids.

Durch die im Schritt f) vorgenommene Schockabkühlung mit einem kalten Spülfluid, verspröden die in der Pulpe enthaltenen und in den Schritten d) und e) von anhaftenden Bindern befreiten Fasern und können dadurch leichter zu kleinen Faserpartikeln gebrochen oder vermahlen werden.

Für eine besonders wirksame Schockabkühlung besteht zwischen der im Schritt e) vorliegenden heißen Pulpe und dem kalten Spülfluid, beispielsweise einer kalten Spülflüssigkeit, eine Temperaturdifferenz von mindestens 50 K, vorzugsweise eine Temperaturdifferenz, die im Bereich von 50 K bis 200 K liegt. Besonders vorteilhaft ist es, wenn die Temperatur des insbesondere flüssigen Spülfluids höchstens 50 %, vorzugsweise höchstens 25 %, der Temperatur der Pulpe beträgt.

Beträgt in einem Praxisbeispiel die Temperatur der Pulpe 100 °C, ist das Spülfluid, beispielsweise Wasser, bevorzugt kälter als 50°C, vorzugsweise sogar kälter als 25°C, wobei das Spülfluid aber vorteilhafterweise wärmer als 0°C ist.

Bevorzugt erfolgt das Vermischen der zerkleinerten Faserwertstoffe mit dem Wasser oder dem Wasser enthaltenden Fluid zu einer fließfähigen Pulpe im Schritt c) in einer der Zerkleinerungseinrichtung nachgeordneten Mischeinrichtung und die fließfähige Pulpe wird einem Hydrothermalreaktor zugeführt, in dem zumindest der Schritt d) durchgeführt wird.

Von Vorteil ist es, wenn die im Schritt d) in einem Hydrothermalreaktor für einen vorgegebenen Zeitraum mit thermischer Energie unter Überdruck beaufschlagte Pulpe anschließend unter dem Überdruck des Schritts d) stehend in einen Dekompressionsbehälter geleitet wird, in dem die Druckentspannung des Schritts e) durchgeführt wird. Diese Trennung zwischen der thermischen Behandlung unter Überdruck im Hydrothermalreaktor und der anschließenden Entspannung in einem nachgeordneten separaten Dekompressionsbehälter ermöglicht die Durchführung des Verfahrens in einem kontinuierlichen Prozess.

Vorzugsweise erfolgt die Schockabkühlung der Pulpe im Schritt f) im Dekompressionsbehälter.

Alternativ erfolgt die Schockabkühlung der Pulpe im Schritt f) in einem dem Dekompressionsbehälter nachgeordneten Abkühlbehälter.

In einer zu einem kontinuierlichen Prozess alternativen Batch-Variante des Verfahrens werden die Schritte d), e) und gegebenenfalls auch Schritt f) in einem als Druckreaktor ausgebildeten Hydrothermalreaktor durchgeführt.

Von Vorteil ist eine Ausführungsform des Verfahrens, bei der das Fluid vor dem Vermischen mit den zerkleinerten Faserwertstoffen im Schritt c) auf eine Temperatur von über 80°C, vorzugsweise auf eine Temperatur im Bereich zwischen 80°C bis 95°C, erhitzt wird. Dadurch wir die Auflösung von in den Faserwertstoffen enthaltenen wasserlöslichen Bindemitteln erleichtert und der Prozess beschleunigt.

Vorteilhaft ist es auch, wenn im Schritt d) eine mechanische Bearbeitung der Pulpe zur Zerfaserung der Mineralfaseranteile der Pulpe mittels einer beispielsweise ein Rührwerk oder ein Mahlwerk aufweisenden, vorzugsweise mechanischen oder hydraulischen, Agitationseinrichtung und/oder mittels in der Pulpe enthaltener Agitationskörper erfolgt.

Auch von Vorteil ist es, wenn die Pulpe im Schritt d) auf eine Temperatur von über 100 °C, aber höchstens auf 310 °C, erhitzt wird, vorzugsweise auf eine Temperatur zwischen 140 °C und 250 °C, weiter vorzugsweise aber nicht über 225 °C, erhitzt wird.

Bevorzugterweise beträgt der Druck im Schritt d) zwischen 1 bar und 100 bar, vorzugsweise zwischen 1 bar und 40 bar, weiter vorzugsweise zwischen 4 bar und 25 bar.

In einer besonders bevorzugten Ausführungsform des Verfahrens, die mit anderen Ausführungsformen kombinierbar ist, wird der im Schritt e) abgeführte Dampf einer Dampfreinigungsvorrichtung zugeführt. Der dort gereinigte Dampf oder das daraus entstehende Kondensat kann im Verfahren wiederverwendet werden, beispielsweise im Kreislauf in den Schritt c) zurückgeführt werden.

Von Vorteil ist es auch, wenn die im Schritt f) abgekühlte Pulpe einer Mahleinrichtung, insbesondere einer Nassvermahlungseinrichtung, mit vorzugsweise zumindest einem Mahlwerk zugeführt wird, in der sie in einem Schritt g) vermahlen, insbesondere nassvermahlen, wird. Die im Schritt f) durch die Schock-Abkühlung spröde gewordenen Fasern werden im Mahlwerk der nachgeordneten Mahleinrichtung mechanisch zerkleinert, vorzugsweise pulverisiert.

Dabei ist es vorteilhaft, wenn die vermahlene Pulpe in einem anschließenden Schritt h) getrocknet und dadurch in einen pulverisierten trockenen Zustand gebracht wird. Das dadurch erhaltene Pulver der ehemaligen Mineralfasern ist gesundheitlich unbedenklich.

Bevorzugterweise wird die im Schritt f) abgekühlte Pulpe oder die im Schritt g) vermahlene Pulpe in einem nachfolgenden Schritt h') mit einem hydraulischen oder hydratischen Bindemittel vermischt und beispielsweise zu Körpern geformt.

Der auf die Vorrichtung gerichtete Teil der Aufgabe wird alternativ gelöst durch eine Vorrichtung mit den Merkmalen des Anspruchs 15 oder des Anspruchs 16.

Eine Vorrichtung zur Durchführung eines Verfahrens nach einem der vorhergehenden Ansprüche mit einem als Druckreaktor ausgebildeten Hydrothermalreaktor, zeichnet sich dadurch aus, dass in Prozessrichtung vor dem Hydrothermalreaktor eine Zerkleinerungseinrichtung und eine dieser nachgeordnete Mischeinrichtung vorgesehen sind, wobei zwischen der Zerkleinerungseinrichtung und der Mischeinrichtung eine erste Transporteinrichtung vorgesehen ist und wobei zwischen der Mischeinrichtung und dem Hydrothermalreaktor eine zweite Transporteinrichtung vorgesehen ist; dass die zweite Transporteinrichtung in den Hydrothermalreaktor in einem Einlass für die künstliche Mineralfasern enthaltende Pulpe mündet und dass der Hydrothermalreaktor eine Dampfablasseinrichtung und eine Spülfluid-Zuführeinrichtung sowie einen Auslass für die Pulpe aufweist. Diese erste Variante der erfindungsgemäßen Vorrichtung ist für die Durchführung des erfindungsgemäßen Verfahrens im Batch-Prozess geeignet.

Eine alternative Vorrichtung zur kontinuierlichen Durchführung eines Verfahrens nach einem der vorhergehenden Ansprüche mit einem als Druckreaktor ausgebildeten Hydrothermalreaktor, zeichnet sich dadurch aus, dass in Prozessrichtung vor dem Hydrothermalreaktor eine Zerkleinerungseinrichtung und eine dieser nachgeordnete Mischeinrichtung vorgesehen sind, wobei zwischen der Zerkleinerungseinrichtung und der Mischeinrichtung eine erste Transporteinrichtung vorgesehen ist und wobei zwischen der Mischeinrichtung und dem Hydrothermalreaktor eine zweite Transporteinrichtung vorgesehen ist; dass zwischen der Mischeinrichtung und dem Hydrothermalreaktor eine einlassseitige Druckschleuse vorgesehen ist; dass in Prozessrichtung hinter dem Hydrothermalreaktor ein mit einer Dampfablasseinrichtung versehener Dekompressionsbehälter vorgesehen ist, der über eine dritte Transporteinrichtung mit dem Hydrothermalreaktor verbunden ist, und dass zwischen dem Hydrothermalreaktor und dem Dekompressionsbehälter eine auslassseitige Druckschleuse vorgesehen ist. Das Vorsehen der beiden Druckschleusen ermöglicht einen kontinuierlichen Betrieb der Vorrichtung.

Vorzugsweise weist die zum Einlass des Hydrothermalreaktors für die künstliche Mineralfasern enthaltende Pulpe führende Transporteinrichtung eine für den im Hydrothermalreaktor anstehenden Druck geeignete Fördervorrichtung, zum Beispiel eine Förderschnecke, auf oder sie ist von einer solchen Fördereinrichtung gebildet.

Dabei ist es von Vorteil, wenn der Dekompressionsbehälter oder ein in Prozessrichtung hinter dem Dekompressionsbehälter vorgesehener und mit diesem über eine vierte Transporteinrichtung verbundener Abkühlbehälter eine Spülfluid-Zuführeinrichtung sowie einen Auslass für die Pulpe aufweist.

Gemäß einer bevorzugten Ausführungsform der erfindungsgemäßen Vorrichtungen, die mit anderen Ausführungsformen kombinierbar ist, ist in Prozessrichtung hinter dem Hydrothermalreaktor oder hinter dem Dekompressionsbehälter oder hinter dem Abkühlbehälter eine Mahleinrichtung mit vorzugsweise einem Mahlwerk für die im Schritt f) abgekühlte Pulpe vorgesehen. Mittels dieser Mahleinrichtung können die rückgewonnenen und durch die Schock-Abkühlung versprödeten Fasern und Faseranteile, insbesondere zu feinem Pulver, vermahlen werden.

In einer besonders vorteilhaften Ausführungsform, die mit anderen Ausführungsformen kombinierbar ist, weist der Hydrothermalreaktor eine, vorzugsweise interne, Heizeinrichtung auf, die beispielsweise eine elektrische Heizung oder eine Mikrowellenheizung aufweist.

Besonders bevorzugt ist eine weitere Ausführungsform, die ebenfalls mit anderen Ausführungsformen kombinierbar ist, bei der der Hydrothermalreaktor eine (vorzugsweise mechanische oder hydraulische) Agitationseinrichtung für die Pulpe aufweist, die ihrerseits beispielsweise ein Rührwerk oder ein Mahlwerk oder eine Umwälzeinrichtung für die Pulpe oder für eine Agitationsflüssigkeit aufweist. Eine solche Agitationseinrichtung beschleunigt das im Verfahrensschritt d) erfolgende Ablösen der Mineralfasern von den nicht-mineralfaserigen Bestandteilen der Pulpe, insbesondere von Klebern und anderen Bindemitteln.

Besonders bevorzugt ist eine Ausführungsform der Erfindung, die mit anderen Ausführungsformen kombinierbar ist, bei der der fließfähigen Pulpe vor dem Schritt d) oder nach dem Schritt e) organische Bindemittel metabolisierende Mikroorganismen, insbesondere Bakterien, Pilzen und/oder Hefen, zugeführt werden und wobei die mit den organische Bindemittel metabolisierenden Mikroorganismen angereicherte Pulpe für einen vorgegebenen Verweilzeitraum in einem Behälter, vorzugsweise einem Bioreaktor, verweilt, bevor der nächste Verfahrensschritt eingeleitet wird.

Von Vorteil ist dabei, wenn die in der mit den organische Bindemittel metabolisierenden Mikroorganismen angereicherten Pulpe enthaltenen zerkleinerten Faserwertstoffe von dem Flüssigkeitsanteil der Pulpe und den darin enthaltenen organischen Stoffen separiert werden, wenn die separierten Faserwertstoffe mittels eines Reinigungsfluids von verbleibenden Anhaftungen organischer Stoffe gereinigt werden und wenn die gereinigten separierten Faserwertstoffe vorzugsweise in einem weiteren Schritt getrocknet werden.

Durch den Einsatz von organische Bindemittel metabolisierenden Mikroorganismen werden die Faserwertstoffe auf biologische Weise ohne größeren Energieeinsatz von den Anhaftungen von organischen Bindemitteln, beispielsweise von organischen synthetischen Harzen und/oder organischen nicht-synthetischen Bindemitteln, befreit. Diese Metabolisierung erfolgt vorwiegend während des Verweilzeitraums der eine Suspension bildenden Pulpe im Behälter, vorzugsweise im Bioreaktor.

Der Begriff "Mikroorganismus" bezeichnet hier einen mikroskopisch kleinen Organismus, insbesondere Bakterien, Viren, Hefen oder Pilze. Bei dem erfindungsgemäßen Verfahren werden vorzugsweise Milchsäurebakterien (Lactobacillales), sogenannte "Purpurbakterien", Actinomyces, Hefen, wie beispielsweise Candida parapsilosis oder Candida tropicalis, und/oder Schimmelpilze, wie beispielsweise Aspergillus, Penicillium, Neurospora, Trametes, Trichosporon and Trichoderma, verwendet.

Die alterungsbedingte Anreicherung von Kohlenstoff in phenolhaltigem Bindemittel erleichtert und erhöht den Verbrauch von Phenol als einzige Kohlenstoffquelle durch den Mikroorganismus. Beim mikrobiellen Abbau von Phenol unter aeroben Bedingungen wird der Abbau durch Oxygenierung eingeleitet, bei der der aromatische Ring zunächst durch eine Mono-Oxygenase-Phenolhydroxylase in ortho-Position zur bereits vorhandenen Hydroxylgruppe monohydroxyliert wird, um Catechol, auch Pyrocatechol genannt, [Brenzcatechin (1,2-Dihydroxybenzol)] zu bilden. Dies ist das wichtigste Zwischenprodukt, das beim Stoffwechsel von Phenol durch verschiedene Mikrobenstämme entsteht. Unter anaeroben Bedingungen wird der Abbau durch Carboxylierung des Phenols eingeleitet.

Die organische Bindemittel metabolisierenden Mikroorganismen verdauen die als Verunreinigung im Sinne der Erfindung betrachteten organischen Bindemittel, beispielsweise die organischen synthetischen Harze und/oder organischen nicht-synthetischen Bindemittel. Zurück bleibt eine von bindemittelhaltigen Bestandteilen gereinigte Arbeitsflüssigkeit, zum Beispiel Wasser, die allenfalls noch eine ganz geringe Konzentration an Bindemittelkomponenten im Bereich der Nachweisgrenze aufweist.

Obwohl die mit den organischen Bindemitteln, also den organischen synthetischen Harzen und/oder den organischen nicht-synthetischen Bindemitteln, behafteten Faserwertstoffe beispielsweise auch in einem Sandbett mit den Bindemittel metabolisierenden Mikroorganismen in Kontakt gebracht und diesen ausgesetzt werden können, erfolgt die mikrobiologische Beaufschlagung und Behandlung der mit den organischen Bindemitteln behafteten mineralischen Substrate bevorzugt in einer Suspension, vorzugsweise in einer wässrigen Suspension. Die Wirksamkeit ist hier besser als beispielsweise in einem Sandbett. Mikroorganismen können in einer wässrigen Lösung spontan wachsen und so kann sich mit der Zeit eine für das betreffende Bindemittel optimierte und spezialisierte Mikroorganismen-Population ausbilden und dementsprechend eine besonders effiziente Mikroorganismen-Konzentration in der Suspension einstellen. Für das Wachstum der Bindemittel metabolisierenden Mikroorganismen sollte bei phenolhaltigem Bindemittel in der Suspension eine Mindestkonzentration des Phenols über der analytischen Nachweisgrenze von Phenol in wässriger Lösung vorliegen, also über 1 mg/l, vorzugsweise über 2,5 mg/l; die optimale Phenolkonzentration liegt dabei bevorzugt in einem Bereich von 20 mg/l bis zu 5 g/l. Das Vorhandensein von herkömmlichen Kohlenstoffquellen kann die Abbauwirkung verstärken.

Gemäß einer bevorzugten Ausführungsform der Erfindung sind die Bindemittel metabolisierenden Mikroorganismen Bakterien oder sie weisen Bakterien auf. Besonders eignen sich hier Milchsäurebakterien (Lactobacillales), sogenannte "Purpurbakterien", oder Bakterien aus der Gattung Actinomyces.

Beispiele für wirksame Mikroorganismen für den Abbau von Phenolverbindungen sind unter anderem Milchsäurebakterien wie Lactobacillus plantarum, Lactobacillus casei und Streptococcus lactis, die Milchsäure als wichtigstes Stoffwechselendprodukt produzieren. Die Gattungen, die die Milchsäurebakterien umfassen, sind im Kern Lactobacillus, Leuconostoc, Pediococcus, Lactococcus und Streptococcus sowie die eher peripheren Aerococcus, Carnobacterium, Enterococcus, Oenococcus, Sporolactobacillus, Tetragenococcus, Vagococcus und Weissella. Mit Ausnahme von Sporolactobacillus gehören alle zur Ordnung der Milchsäurebakterien, und alle gehören zum Stamm der Bacillota. Bakterien der Gattung Bifidobacterium (Stamm Actinomycetota) produzieren ebenfalls Milchsäure und sind daher für das erfindungsgemäße Verfahren geeignet.

Purpurbakterien, wie zum Beispiel Rhodopseudomonas palustrus und Rhodobacter spaeroides, können ihre eigene Nahrung produzieren. Sie lassen sich in zwei Gruppen einteilen: Purpurschwefelbakterien (Chromatiales, teilweise) und Purpurnichtschwefelbakterien (Rhodospirillaceae). Purpurbakterien sind anoxygene Phototrophe, die in der Natur weit verbreitet sind, vor allem aber in der aquatischen Umwelt. Auch diese Bakterien können im erfindungsgemäßen Verfahren eingesetzt werden.

Actinomyces, wie z. B. Streptomyces albus und Streptomyces griseus, ist eine Gattung aus der Klasse der Actinomycetia-Bakterien. Actinomyces-Arten sind im Allgemeinen fakultativ anaerob. Sie produzieren einige Enzyme, die zum Abbau von organischem Material beitragen, und sind daher ebenfalls für das erfindungsgemäße Verfahren geeignet.

Die Bindemittel metabolisierenden Mikroorganismen können alternativ oder zusätzlich auch Hefen und/oder Pilze sein oder diese aufweisen.

Hefen sind einzellige Organismen, wobei einige Arten die Fähigkeit besitzen, mehrzellige Merkmale zu entwickeln, indem sie Stränge miteinander verbundener knospender Zellen bilden, die als Pseudohyphen oder falsche Hyphen bekannt sind und zur Gattung der Pilze gehören. Hefen wie Candida parapsilosis oder Candida tropicalis haben eine hohe biologische Abbaugeschwindigkeit von Phenolverbindungen in wässriger Lösung gezeigt und können daher ebenfalls im erfindungsgemäßen Verfahren eingesetzt werden.

Als Pilz wird jedes Mitglied der Gruppe der eukaryotischen Mikroorganismen bezeichnet, zu der auch Hefen und Schimmelpilze gehören. Pilze wie Aspergillus, Penicillium, Neurospora, Trametes, Trichosporon und Trichoderma haben sich als wirksam beim Abbau von Phenolverbindungen in wässrigen Lösungen erwiesen und sind daher auch für das erfindungsgemäße Verfahren geeignet.

Ein Schimmelpilz, wie z. B. Aspergillus oryzae, Mucor hiemalis, ist eine der Strukturen, die bestimmte Pilze bilden können. Das staubartige, farbige Aussehen der Schimmelpilze ist auf die Bildung von Sporen zurückzuführen, die sekundäre Stoffwechselprodukte der Pilze enthalten. Die Sporen sind die Verbreitungseinheiten der Pilze. Nicht alle Pilze bilden Schimmelpilze. Einige Pilze bilden Pilze, andere wachsen als Einzelzellen und werden als Mikropilze bezeichnet (z. B. Hefen). Schimmelpilze werden als Mikroben betrachtet und bilden keine spezifische taxonomische oder phylogenetische Gruppierung. Schimmelpilze bewirken den biologischen Abbau von organischem Material und können im erfindungsgemäßen Verfahren ebenfalls eingesetzt werden.

Die Forschung hat gezeigt, dass bestimmte Pilzarten wirksamer sind als andere. So hatten beispielsweise die Stämme Phanerochaete chrysosporium oder Pleurocybella porrigens bei gleichem Ergebnis eine fast dreimal so hohe Wirksamkeit des Phenolabbaus wie Trichaptum biforme. Bakterien wie Pseudomonas pictorum, ein Mitglied der Familie der Pseudomonadaceae, haben positive Ergebnisse gezeigt. Die Bakteriengruppe Burkholderia cepacia zeigt hohe Phenol-Abbaugeschwindigkeiten und erhebliche Konzentrationen.

Von besonderem Vorteil ist es, wenn die Metabolisierung im Behälter bei einer Temperatur im Bereich zwischen 25°C und 45°C, vorzugsweise zwischen 30°C und 40°C, weiter vorzugsweise bei 35°C, durchgeführt wird. Die Durchführung erfolgt vorzugsweise vor dem Schritt d) oder nach dem Schritt e) bei Umgebungsdruck ohne Überdruck. In diesen Temperaturbereichen ist die Wirksamkeit der Metabolisierung, insbesondere des mikrobiellen Phenolabbaus, besonders gut.

Gemäß einer bevorzugten Ausführungsform dieser Weiterbildung des erfindungsgemäßen Verfahrens, die mit anderen Ausführungsformen kombinierbar ist, liegt der pH-Wert der Pulpe bei der Metabolisierung im Behälter zwischen pH 6 und pH 9, vorzugsweise zwischen pH 7 und pH 8, und er beträgt weiter vorzugsweise pH 7,5 bis pH 8 und insbesondere vorteilhaft pH 8.

Der biologische Abbau von Phenol in einer wässrigen Lösung hängt im Hinblick auf seine Intensität vom pH-Wert der Pulpe ab, der die Oberflächenladung des Absorptionsmittels und den Grad der Ionisierung beeinflusst. Eine Erhöhung des pH-Werts der Pulpe von pH 6 auf pH 8 bei 30 °C verbessert die Abbaugeschwindigkeit von Phenol.

Die Idee der Weiterbildung des Erfindungsgemäßen Verfahrens mit der zusätzlichen mikrobiologischen Metabolisierung besteht also darin, ein Verfahren zur mechanischen Behandlung und Bearbeitung von künstliche Mineralfasern aufweisenden Wertstoffprodukten um mikrobiologisch aktive Prozessstufen zu ergänzen, in denen die an den bereits separierten Faserwertstoffen, wie beispielsweise Mineralfaser-Reststoffen, anhaftenden organische Bindemittel, also beispielsweise die phenolhaltigen synthetischen Harze und/oder die nicht-synthetischen organischen Bindemittel, durch Metabolisierung entfernt und abgebaut werden.

Die dabei auftretenden Stoffwechselprozesse werden durch die Wirkung von Enzymen gesteuert, die für jede Art von Reaktion spezifisch sind. Der mikrobiologische Abbauprozess erfolgt in Anwesenheit von molekularem Sauerstoff, um den enzymatischen Angriff auf die aromatischen Ringe des Phenols einzuleiten. Ein typischer Weg für den Metabolismus von Phenol ist die Hydroxylierung des Rings durch das Enzym Phenolhydroxylase, Catechol und die anschließende Öffnung des Rings durch ortho- oder meta-Oxidation. Die Phenolhydroxylase ist das erste Enzym im Stoffwechselweg des Phenolabbaus.

Zusammenfassend sind nachstehend besonders bevorzugte Parameter dieser Weiterbildung des erfindungsgemäßen Verfahrens für den Abbau von phenolhaltigen organischen Bindemitteln angegeben:
- die Mikroorganismen arbeiten effizient bei Konzentrationen von Phenol-Formaldehyd-Harnstoff-Bindemitteln (PFU-Konzentrationen), bezogen auf das reine Phenol, im Bereich von <20 mg/l bis zu 5 g/l, wobei der untere Wert durch die (aktuelle) absolute Nachweisgrenze von Phenol in wässriger Lösung bestimmt wird, die - je nach der angewendeten Analysemethode - bei 1 mg/l bis 2,5 mg/l liegt;
- der pH-Wert legt vorzugsweise im Bereich von pH 6 bis pH 9;
- die Temperatur beträgt bevorzugt etwa 35°C +/- 10°C;
- der Abbau erfolgt durch einen Angriff auf den Phenolring, aus dem das Phenol-Formaldehyd-Harnstoff-Bindemittel besteht;
- besonders wirksame Mikroorganismen sind Lactobacillales, Purpurbakterien, Actinomyces, Pilze, Hefen und Schimmel;
- der Abbau der phenolhaltigen Bindemittel erfolgt zwischen einigen Stunden und bis zu 200 Stunden mit einer Abbaurate von maximal 97 %.

Mit dem erfindungsgemäßen Verfahren werden vorzugswiese künstlich hergestellte Mineralfasern aus gebrauchten Faserwertstoffen behandelt, die aus anwendungstechnischen Gründen mit organischen oder anorganischen Bindern gebunden wurden. Derartige Faserwertstoffe sind beispielsweise Isoliermatten für Bauwerke oder Formteile für die Isolierung von Rohrleitungen. Die Binder haben in der Regel einen negativen Einfluss auf eine stoffliche Wiederverwertung der künstlich hergestellten Mineralfasern da sie sich, beispielsweise bei der Herstellung von neuen Mineralfasern aus Altfasern, störend auf den Herstellungsprozess, beispielsweise durch Ausbrand in einem nicht gewünschten Temperaturbereich im Schmelzofen, auswirken. Weiterhin zielt das Verfahren darauf ab, künstliche hergestellte Mineralwollen die nach formaler Definition als "gefährlich" oder "krebserzeugend" eingestuft sind, in einen Aggregatzustand zu überführen, auf den diese Definition nicht mehr zutrifft.

Im Verfahren werden die künstlich hergestellten Mineralfaserprodukte verdichtet oder nicht verpackte Mineralwolle-Agglomerate zunächst in der Zerkleinerungseinrichtung auf eine für das Verfahren geeignete Stückelung gebracht. In diesem Schritt können aus den aufgegebenen Mineralwollen auch grobe Verunreinigungen wie beispielsweise Kaschierungen, entfernt werden. Ebenso können bei Bedarf verarbeitungsbedingte und anwendungsbedingte Störkörper oder Fremdkörper, wie beispielsweise Befestigungs- und/oder Verpackungselemente oder anhaftende größere Mörtelreste, entfernt werden, was in einer optional vorgesehenen und der Zerkleinerungseinrichtung nachgeordneten Separationseinrichtung erfolgt.

Die auf eine für das Verfahren notwendige Stückelung gebrachten Faserwertstoffe werden dem Hydrothermalreaktor zugeführt. Im Hydrothermalreaktor oder in einer diesem vorgeschalteten Mischeinrichtung wird ein Wasser, vorzugsweise denaturiertes Wasser, enthaltendes Fluid zugeführt. Das Fluid kann auch in der Form von Dampf oder einer vorgewärmten Flüssigkeit zugeführt werden.

Im Hydrothermalreaktor ist eine Agitationseinrichtung, beispielsweise ein Rührer oder ein Mischer angeordnet und/oder der Pulpe werden Agitationskörper zugegeben. Diese Agitationseinrichtung dient der Zerfaserung der Faserwertstoffe zum Zwecke der besseren Wärmeübertragung im Hydrothermalreaktor zwischen Fluid und Feststoff. Der Hydrothermalreaktor wird dann durch interne und/oder externe Beheizung auf eine vorgegebene Temperatur und einen vorgegebenen Überdruck gebracht. Temperatur und Druck werden, bei ständiger Durchmischung, für einen vorgegebenen Zeitraum gehalten, der ausreichend ist, um eine vollständige oder nahezu vollständige Ablösung der anhaftenden Binder von den in den Faserwertstoffen enthaltenen künstlich hergestellten Mineralfasern zu erreichen.

Nach Abschluss dieses Verfahrensschrittes wird der Überdruck abgelassen und es erfolgt eine Spülung mit einem kalten Spülfluid, beispielsweise mit kaltem Wasser. Gegebenenfalls kann das Spülfluid vor der Einleitung auf eine Temperatur erwärmt werden die geringer als die vorherige Behandlungstemperatur ist. Diese kalte Spülung dient nicht nur der Reinigung, sondern auch der Versprödung der Fasern. Das Spülfluid wird nach Ende des Vorganges zusammen mit den Fasern als verdünnte Pulpe abgelassen.

In einem optionalen nachgeordneten Verfahrensschritt kann dann eine Nassvermahlung der Pulpe erfolgen. Die vermahlene Pulpe kann anschließend einer ein- oder mehrstufigen Trocknung unterzogen werden, um als Pulver für eine spätere Verwendung zur Verfügung zu stehen. Die Nassvermahlung ist insbesondere dann vorteilhaft, wenn die Geometrie der im Verfahren behandelten und so rückgewonnenen (ehemals künstlich erzeugten) Mineralfasern und/oder Mineralfaserpartikel dahingehend beeinflusst werden soll, dass sie nicht mehr nach formaler Definition als gefährlich oder krebserregend gelten.

Alternativ können aus der Pulpe, die mit einem hydraulischen oder hydratischen Bindemittel vermischt wird, Formkörper hergestellt werden.

Der Hydrothermalreaktor besteht beispielsweise aus einem Druckgefäß mit einem im Boden eingelassenen Pulperelement aus der Papierindustrie. Er verfügt über eine mit einem Absperrschieber versehene Zufördereinrichtung, vorzugsweise eine Schnecke, die beispielsweise im oberen Bereich des Hydrothermalreaktors in diesen mündet. Diese Schnecke dient auch dazu, die Fasern im Hydrothermalreaktor zu verdichten. Aus diesem Grund sollte die Schnecke vorzugsweise in Mittelachsenrichtung angeordnet werden um einen maximalen Effekt zu erzielen. An der Unterseite des Hydrothermalreaktors sind beispielsweise ein Entleerungsschieber sowie mehrere Einlässe für Dampf beziehungsweise ein Fluid vorgesehen. Soll der Hydrothermalreaktor intern elektrisch beheizt werden, befindet sich im unteren Teil auch zumindest ein elektrisches Heizelement. Im oberen Teil des Druckgefäßes befindet sich ein Auslassventil für Dampf.

Dampf bildet sich immer dann, wenn aus dem Druckgefäß, in dem sich ein Fluid, also hier die Pulpe, im Überdruck befindet, plötzlich der Überdruck abgelassen wird. Der abgelassene Dampf kann nach einer Kondensation als Fluid wieder in den Prozess eingeleitet werden. Der Dampf ist, wenn er aus dem Druckgefäß abgeführt wird, mit gelösten Bindemitteln verunreinigt und sollte, da mit der Zeit eine Aufkonzentration von Bindemitteln erfolgt, nach dem Erreichen einer vorgegebenen Bindemittelkonzentration aus dem Kreislauf abgeleitet werden und als Dampf oder kondensiertes Fluid einer Reinigung unterzogen werden.

Eine geeignete Zykluszeit der verfahrensgemäßen Behandlung der Faserwertstoffe beträgt beispielsweise 60 Minuten.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Flussdiagramm einer einfachen ersten Variante des erfindungsgemäßen Verfahrens;
- Fig. 2: eine Schemadarstellung einer Vorrichtung zur Durchführung der ersten Variante des erfindungsgemäßen Verfahrens;
- Fig. 3: eine Prinzipskizze einer ersten Variante eines Hydrothermalreaktors;
- Fig. 4: ein Flussdiagramm einer zweiten Variante des erfindungsgemäßen Verfahrens;
- Fig. 5: eine Schemadarstellung einer Vorrichtung zur Durchführung der zweiten Variante des erfindungsgemäßen Verfahrens;
- Fig. 6: eine Prinzipskizze einer zweiten Variante eines Hydrothermalreaktors für einen kontinuierlichen Betrieb;
- Fig. 7: ein Flussdiagramm einer dritten Variante des erfindungsgemäßen Verfahrens;
- Fig. 8: ein Flussdiagramm einer vierten Variante des erfindungsgemäßen Verfahrens und
- Fig. 9: eine Prinzipskizze einer dritten Variante eines Hydrothermalreaktors für einen kontinuierlichen Betrieb.

### DARSTELLUNG VON BEVORZUGTEN AUSFÜHRUNGSBEISPIELEN

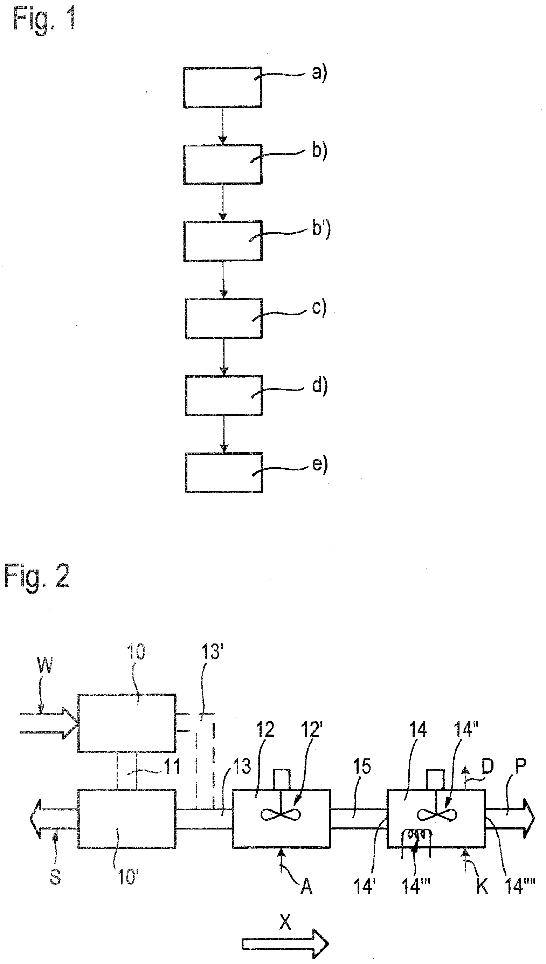

Fig. 1 zeigt ein Flussdiagramm einer einfachen ersten Variante des erfindungsgemäßen Verfahrens. Fig. 2 ist eine Schemadarstellung einer beispielhaften Vorrichtung zur Durchführung dieser ersten Variante des erfindungsgemäßen Verfahrens.

Ein Wertstoffstrom W von gebrauchten Faserwertstoffen, die neben anderen Störstoffen wie Kaschiermaterial oder Mörtelresten künstlich erzeugte Mineralfasern aufweisen, wird in einem ersten Schritt a) einer Zerkleinerungseinrichtung 10 zugeführt. In der Zerkleinerungseinrichtung 10 werden die gebrauchten Faserwertstoffe in einem zweiten Schritt b) auf an sich bekannte Weise zerkleinert und aufgefasert. Sind in dem Wertstoffstrom W noch größere Störstoffanteile wie beispielsweise größere Mörtelklumpen enthalten, die im Schritt b) nicht zerkleinert worden sind, so werden diese in einem optionalen Zwischenschritt b') in einer mechanischen Separationseinrichtung 10' von den Faserwertstoffen getrennt, wozu der in der Zerkleinerungseinrichtung 10 bearbeitete Stoffstrom durch einen Förderweg 11 der Separationseinrichtung 10' zugeführt wird. Die von den Faserwertstoffen getrennten Störstoffanteile werden aus der Separationseinrichtung 10' und aus dem Prozessablauf durch einen Störstoffauslass S abgeführt.

Die in der Zerkleinerungseinrichtung 10 vorzerkleinerten Faserwertstoffe werden entweder nach der optionalen Separation in der mechanischen Separationseinrichtung 10' mittels einer ersten Fördereinrichtung 13 oder - bei einem nur geringen Störstoffanteil - mittels einer in Fig. 2 gestrichelt dargestellten ersten Fördereinrichtung 13' direkt einer Mischeinrichtung 12 zugeführt. Diese direkte Fördereinrichtung 13' kann auch bei allen anderen Varianten vorgesehen sein. In der Mischeinrichtung 12 wird in einem dritten Schritt c) durch Zugabe von vorzugsweise warmem Wasser mit einer Temperatur von 80°C bis 95°C durch einen Wassereinlass A ein pumpfähiges Gemisch hergestellt. Dabei werden die zerkleinerten Faserwertstoffe mit dem Wasser zu einer fließfähigen Pulpe vermischt, was vorzugsweise mittels eines in der Mischeinrichtung 12 vorgesehenen Rührers 12' erfolgt.

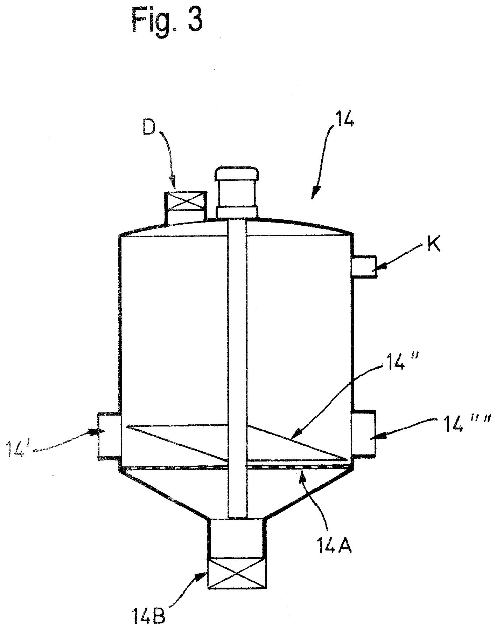

Die so erzeugte Pulpe wird aus der Mischeinrichtung 12 mittels einer zweiten Fördereinrichtung 15 einem als Druckreaktor mit einem druckdicht verschließbaren Einlass 14' und einem druckdicht verschließbaren Auslass 14"" ausgebildeten Hydrothermalreaktor 14 zugeführt, wobei die zweite Fördereinrichtung in den Einlass 14' des Hydrothermalreaktors 14 für die künstliche Mineralfasern enthaltende Pulpe mündet. Ein solcher Hydrothermalreaktor ist schematisch in Fig. 3 dargestellt, wobei dieser Hydrothermalreaktor noch einen Siebboden 14A und einen darunter angeordneten Wasserauslass 14B aufweist.

Im Hydrothermalreaktor 14 wird die Pulpe mittels einer beispielsweise ein Rührwerk aufweisenden, vorzugsweise mechanischen oder hydraulischen, Agitationseinrichtung 14" oder anderer Agitationsmittel ständig bewegt und gemischt, wobei die Temperatur im Hydrothermalreaktor 14 auf maximal 225°C bei einem Druck von maximal 25 bar gesteigert wird. Die Temperaturerhöhung kann mittels einer internen oder externen Heizeinrichtung 14‴, beispielsweise einer elektrischen Heizung oder einer Mikrowellenheizung oder der Eindüsung von gespanntem Dampf erfolgen. Auf diese Weise wird die Pulpe im vierten Schritt d) für einen vorgegebenen Zeitraum unter Überdruck mit thermischer Energie beaufschlagt.

Nach Abschluss der hydrothermalen Behandlung der Faserwertstoffe im Hydrothermalreaktor 14 wird der Überdruck durch ein Druckablassventil D abgelassen, wobei Wasserdampf freigesetzt wird. Es erfolgt so im fünften Schritt e) ein Entspannen des Überdrucks auf Umgebungsdruck und Abführen des dabei entstehenden Dampfes aus dem Hydrothermalreaktor 14.

Optional kann dann noch der Hydrothermalreaktor 14 zum Zwecke der Schock-Abkühlung der Pulpe in einem Schritt f) durch eine von einem Kaltwassereinlass gebildete Spülfluid-Zuführeinrichtung K mit kaltem Wasser geflutet werden.

Die so in den Schritten a) bis e) oder a) bis f) behandelte Pulpe wird schließlich durch einen Auslass 14"" für die mit dem Spülwasser verdünnte Pulpe aus dem Hydrothermalreaktor 14 abgeführt, was durch den Auslasspfeil P in Fig. 2 symbolisiert ist.

Danach kann die Pulpe beispielsweise direkt mit Zement versetzt werden und daraus Tafeln geformt werden, die zur Herstellung von Mineralfasern mit Kupolöfen verwendbar sind. Alternativ kann die Pulpe getrocknet und zu Pulver zermahlen werden, wobei das Pulver bei der Zementherstellung oder der Mineralfaserherstellung mit Schmelzwannen Verwendung finden kann.

Vor oder hinter dem Hydrothermalreaktor 14 kann ein weiterer - nicht dargestellter - Behälter vorgesehen sein, der einen Bioreaktor bildet, in dem die Pulpe mit Mikroorganismen angereichert wird, die organische Bindemittel metabolisieren. In diesem Behälter verweilt die mit den Mikroorganismen dotierte Pulpe für einen vorgegebenen Verweilzeitraum, bevor der nächste Verfahrensschritt eingeleitet wird. Diese Beaufschlagung der Pulpe mit organische Bindemittel metabolisierenden Mikroorganismen kann bei allen Varianten des erfindungsgemäßen Verfahrens und der zugeordneten Vorrichtung vorgesehen sein.

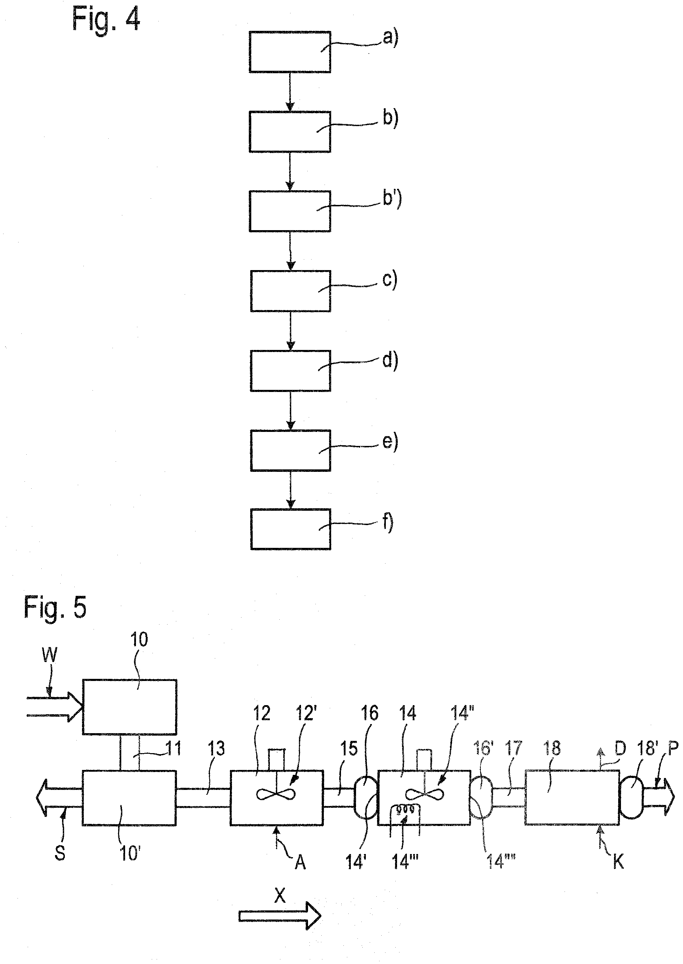

Fig. 4 zeigt ein Flussdiagramm einer zweiten Variante des erfindungsgemäßen Verfahrens. Fig. 5 ist eine Schemadarstellung einer beispielhaften Vorrichtung zur Durchführung dieser zweiten Variante des erfindungsgemäßen Verfahrens, die für einen kontinuierlichen Betrieb ausgebildet ist.

Das Flussdiagramm der Fig. 4 entspricht hinsichtlich der Verfahrensschritte a) bis d) dem der Fig. 1, wobei in dieser zweiten Variante der Schritt e) und der Schritt f) abweichend ausgeführt werden.

Die im Schritt c) in der Mischeinrichtung 12 erzeugte fließfähigen Pulpe wird mittels der zweiten Fördereinrichtung 15 zum Hydrothermalreaktor 14 gefördert, wobei der Hydrothermalreaktor 14 im Bereich seines Einlasses 14' mit einer ersten, einlassseitigen Druckschleuse 16 versehen ist, durch die hindurch die Pulpe in den unter Überdruck stehenden Hydrothermalreaktor 14 kontinuierlich einleitbar ist, ohne dass der Überdruck im Hydrothermalreaktor 14 absinkt. Im Bereich seines Auslasses 14"" ist der Hydrothermalreaktor 14 mit einer zweiten, auslassseitigen Druckschleuse 16' versehen, durch die die hydrothermal behandelte Pulpe mittels einer dritten Fördereinrichtung 17 in einen in Prozessrichtung X stromabwärts des Hydrothermalreaktors 14 diesem nachgeordneten Dekompressionsbehälter 18 unter Überdruck eingeleitet wird. Der Dekompressionsbehälter 18 ist seinerseits auslassseitig mit einer dritten Druckschleuse 18' versehen, die beim Einleiten der hydrothermal behandelten Pulpe in den Dekompressionsbehälter 18 geschlossen ist, so dass im Dekompressionsbehälter 18 im Wesentlichen derselbe Druck herrscht wie im Hydrothermalreaktor 14. Im Dekompressionsbehälter 18 wird dann bei geschlossener zweiter Druckschleuse 16' der Schritt e) des Entspannens des Überdrucks und des Abführens des dabei entstehenden Dampfes durch das im Dekompressionsbehälter 18 vorgesehene Druckablassventil D durchgeführt. Auch der Schritt f) des Abschreckens der Pulpe durch Schock-Abkühlung wird anschließend im Dekompressionsbehälter 18 durchgeführt, wozu dieser mit der Spülfluid-Zuführeinrichtung K für das kalte Wasser versehen ist.

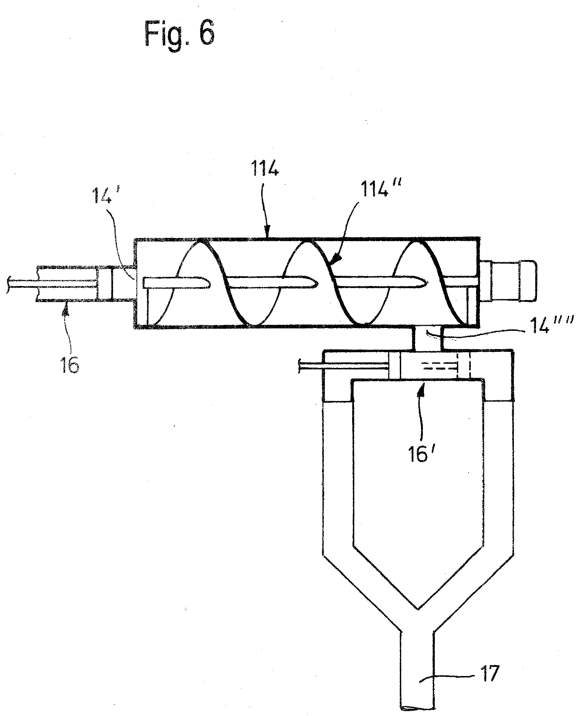

Fig. 6 zeigt in schematischer Darstellung einen hierfür verwendbaren Hydrothermalreaktor 114 mit einer als Rührschnecke ausgebildeten Rühreinrichtung 114". Die erste, einlassseitige Druckschleuse 16 und die zweite, auslassseitige Druckschleuse 16' sind hier jeweils als Doppelkolbenventil ausgebildet und ermöglichen so die kontinuierliche Beschickung des Hydrothermalreaktors 114 mit Pulpe und das kontinuierliche Abführen der hydrothermal behandelten Pulpe.

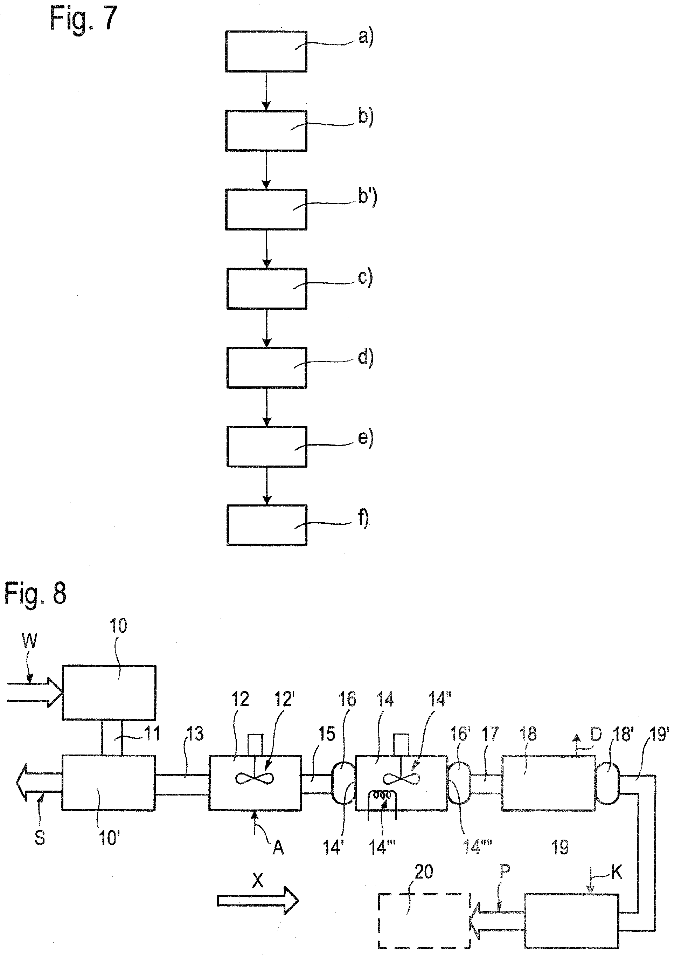

Fig. 7 zeigt ein Flussdiagramm einer dritten Variante des erfindungsgemäßen Verfahrens. Fig. 8 ist eine Schemadarstellung einer beispielhaften Vorrichtung zur Durchführung der zweiten oder dieser dritten Variante des erfindungsgemäßen Verfahrens, die ebenfalls für einen kontinuierlichen Betrieb ausgebildet ist.

Das Flussdiagramm der Fig. 7 entspricht hinsichtlich der Verfahrensschritte a) bis e) dem der Fig. 4, wobei in dieser dritten Variante der Schritt f) abweichend ausgeführt wird.

Wie in Fig. 8 zu erkennen ist, ist dem Dekompressionsbehälter 18 in Prozessrichtung X stromabwärts des Dekompressionsbehälters 18, der dritten Druckschleuse 18' nachgeordnet, ein Abkühlbehälter 19 vorgesehen, der mittels einer vierten Fördereinrichtung 19' mit der dritten Druckschleuse 18' am Dekompressionsbehälter 18 verbunden ist. Der Schritt e) der Entspannung des Überdrucks erfolgt bei dieser Variante ebenfalls im Dekompressionsbehälter, allerdings wird der Schritt f) des Schock-Abkühlens hier im Abkühlbehälter 19 durchgeführt, wozu dieser mit der Spülfluid-Zuführeinrichtung K für das kalte Wasser versehen ist.

Optional kann in Prozessrichtung X stromabwärts des Abkühlbehälters 19 noch eine Nassvermahlungseinrichtung 20 vorgesehen sein, wie sie in Fig. 8 durch die gestrichelten Linien schematisch dargestellt ist. Mit dieser ein (nicht gezeigtes) Mahlwerk aufweisenden Nassvermahlungseinrichtung 20 kann die Pulpe im noch feuchten Zustand gemahlen werden, so dass von den darin enthaltenen gereinigten Mineralfasern nach dem Trocknen nur ein feines Pulver übrig bleibt.

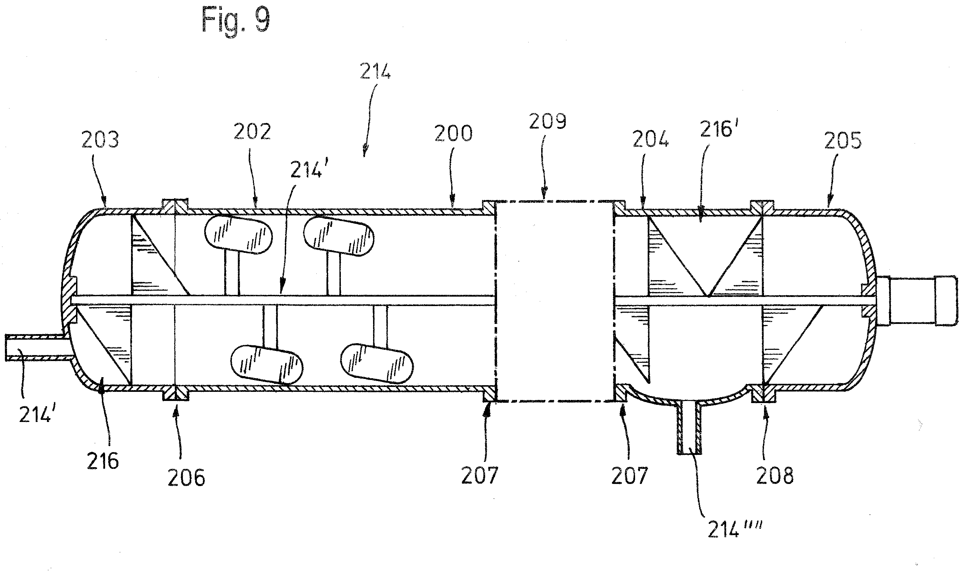

Fig. 9 zeigt in schematischer Darstellung einen für den kontinuierlichen Betrieb verwendbaren Hydrothermalreaktor 214 mit einer Rühreinrichtung 214", einem Einlass 214' und einem Auslass 214"". Die erste, einlassseitige Druckschleuse 216 und die zweite, auslassseitige Druckschleuse 216' sind hier jeweils in das Gehäuse 200 des Hydrothermalreaktors 214 integriert und ermöglichen so die kontinuierliche Beschickung des Hydrothermalreaktors 214 mit Pulpe und das kontinuierliche Abführen der hydrothermal behandelten Pulpe. Das Gehäuse 200 weist einen vorderen zylindrischen Gehäuseteil 202 und einen hinteren zylindrischen Gehäuseteil 204 sowie einen vorderen Gehäusedeckel 203 und einen hinteren Gehäusedeckel 205 auf, die mittels Flanschverbindungen 206, 207, 208 miteinander verbunden sind. Diese Teilung des Gehäuses 200 erlaubt es, entsprechende Gehäuse-Zwischenstücke 209 (in Fig. 9 nur schematisch dargestellt) einzusetzen, wodurch das Gehäuse 200 in seiner Länge vergrößerbar ist und wodurch die Kapazität des Hydrothermalreaktors 214 im kontinuierlichen Betrieb erhöht werden kann.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 10: Zerkleinerungseinrichtung
- 10': Separationseinrichtung
- 11: Förderweg
- 12: Mischeinrichtung
- 12': Rührer
- 13: Fördereinrichtung
- 13': Fördereinrichtung
- 14: Hydrothermalreaktor
- 14': Einlass
- 14": Agitationseinrichtung
- 14‴: Heizeinrichtung
- 14"": Auslass
- 14A: Siebboden
- 14B: Wasserauslass
- 15: Fördereinrichtung
- 16: einlassseitige Druckschleuse
- 16': auslassseitige Druckschleuse
- 17: Fördereinrichtung
- 18: Dekompressionsbehälter
- 18': Druckschleuse
- 19: Abkühlbehälter
- 19': Fördereinrichtung
- 20: Nassvermahlungseinrichtung
- 114: Hydrothermalreaktor
- 114": Rühreinrichtung
- 200: Gehäuse
- 202: vorderer zylindrisches Gehäuseteil
- 203: vorderer Gehäusedeckel
- 204: hinterer zylindrisches Gehäuseteil
- 205: hinterer Gehäusedeckel
- 206: Flanschverbindung
- 207: Flanschverbindung
- 208: Flanschverbindung
- 209: Gehäuse-Zwischenstück
- 214: Hydrothermalreaktor
- 214': Einlass
- 214": Rühreinrichtung
- 214ʺʺ: Auslass
- 216: einlassseitige Druckschleuse
- 216': auslassseitige Druckschleuse

- A: Wassereinlass
- D: Druckablassventil
- K: Spülfluid-Zuführeinrichtung
- P: Auslasspfeil
- S: Störstoffauslass
- W: Wertstoffstrom
- X: Prozessrichtung

## Patentansprüche

1. Verfahren zum Reinigen von zumindest mit organischen Stoffen behafteten gebrauchten Faserwertstoffen, wobei die mit Wasser¹ oder einem Wasser enthaltenden Fluid vermischten Faserwertstoffe in einem Hydrothermalreaktor (14; 114; 214) erhitzt werden,
**gekennzeichnet durch** die folgenden Schritte:
a) Zuführen eines Wertstoffstroms (W) von künstlich erzeugte Mineralfasern aufweisenden Faserwertstoffen zu einer Zerkleinerungseinrichtung (10);
b) Zerkleinern der Faserwertstoffe des Wertstoffstroms (W);
c) Vermischen der zerkleinerten Faserwertstoffe mit dem Wasser oder mit dem Wasser enthaltenden Fluid zu einer fließfähigen Pulpe;
d) Beaufschlagen der Pulpe mit thermischer Energie unter Überdruck für einen vorgegebenen Zeitraum;
e) Entspannen des Überdrucks auf Umgebungsdruck und Abführen des dabei entstehenden Dampfes.

2. Verfahren nach Anspruch 1,
**gekennzeichnet durch den weiteren Schritt:**
f) Abschrecken der Pulpe **durch** Schockabkühlung mittels eines in die Pulpe eingeleiteten kalten Spülfluids.

3. Verfahren nach Anspruch 1 oder 2,
**dadurch gekennzeichnet,**
**dass** das Vermischen der zerkleinerten Faserwertstoffe mit dem Wasser oder dem Wasser enthaltenden Fluid zu einer fließfähigen Pulpe im Schritt c) in einer der Zerkleinerungseinrichtung (10) nachgeordneten Mischeinrichtung (12) erfolgt und
**dass** die fließfähige Pulpe einem Hydrothermalreaktor (14; 114; 214) zugeführt wird, in dem zumindest der Schritt d) durchgeführt wird.

4. Verfahren nach Anspruch 1, 2 oder 3,
**dadurch gekennzeichnet,**
**dass** die im Schritt d) in einem Hydrothermalreaktor (14; 114; 214) für einen vorgegebenen Zeitraum mit thermischer Energie unter Überdruck beaufschlagte Pulpe anschließend unter dem Überdruck des Schritts d) stehend in einen Dekompressionsbehälter (18) geleitet wird, in dem die Druckentspannung des Schritts e) durchgeführt wird.

5. Verfahren nach einem der Ansprüche 2 bis 4,
**dadurch gekennzeichnet,**
**dass** die Schockabkühlung der Pulpe im Schritt f) im Dekompressionsbehälter (18) oder in einem dem Dekompressionsbehälter (18) nachgeordneten Abkühlbehälter (19) erfolgt.

6. Verfahren nach einem der vorhergehenden Ansprüche,
**dadurch gekennzeichnet,**
**dass** im Schritt d) eine mechanische Bearbeitung der Pulpe zur Zerfaserung der Mineralfaseranteile der Pulpe mittels einer Agitationseinrichtung (14") und/oder mittels in der Pulpe enthaltener Agitationskörper erfolgt.

7. Verfahren nach einem der vorhergehenden Ansprüche,
**dadurch gekennzeichnet,**
**dass** die Pulpe im Schritt d) auf eine Temperatur von über 100°C, aber höchstens auf 310 °C, erhitzt wird, vorzugsweise jedoch nicht über 225°C.

8. Verfahren nach einem der vorhergehenden Ansprüche,
**dadurch gekennzeichnet,**
**dass** der Druck im Schritt d) zwischen 1 bar und 100 bar, vorzugsweise zwischen 1 bar und 40 bar, weiter vorzugsweise zwischen 4 bar und 25 bar, beträgt.

9. Verfahren nach einem der vorhergehenden Ansprüche,
**dadurch gekennzeichnet,**
**dass** der im Schritt e) abgeführte Dampf einer Dampfreinigungsvorrichtung zugeführt wird.

10. Verfahren nach einem der Ansprüche 2 bis 9,
**dadurch gekennzeichnet,**
**dass** die im Schritt f) abgekühlte Pulpe einer Mahleinrichtung (20), insbesondere einer Nassvermahlungseinrichtung, zugeführt wird, in der sie in einem Schritt g) vermahlen wird.

11. Verfahren nach Anspruch 10,
**dadurch gekennzeichnet,**
**dass** die vermahlene Pulpe in einem anschließenden Schritt h) getrocknet und in einen pulverisierten Zustand gebracht wird.

12. Verfahren nach einem der Ansprüche 2 bis 10,
**dadurch gekennzeichnet,**
**dass** die im Schritt f) abgekühlte Pulpe oder die im Schritt g) vermahlene Pulpe in einem nachfolgenden Schritt h') mit einem hydraulischen oder hydratischen Bindemittel vermischt wird.

13. Verfahren nach einem der vorhergehenden Ansprüche,
**dadurch gekennzeichnet,**
**dass** der fließfähigen Pulpe vor dem Schritt d) oder nach dem Schritt e) organische Bindemittel metabolisierende Mikroorganismen, insbesondere Bakterien, Pilzen und/oder Hefen, zugeführt werden und dass die mit den organische Bindemittel metabolisierenden Mikroorganismen angereicherte Pulpe für einen vorgegebenen Verweilzeitraum in einem Behälter, vorzugsweise einem Bioreaktor, verweilt, bevor der nächste Verfahrensschritt eingeleitet wird.

14. Verfahren nach Anspruch 13,
**dadurch gekennzeichnet,**
**dass** die in der mit den organische Bindemittel metabolisierenden Mikroorganismen angereicherten Pulpe enthaltenen zerkleinerten Faserwertstoffe von dem Flüssigkeitsanteil der Pulpe und den darin enthaltenen organischen Stoffen separiert werden;
**dass** die separierten Faserwertstoffe mittels eines Reinigungsfluids von verbleibenden Anhaftungen organischer Stoffe gereinigt werden und
**dass** die gereinigten separierten Faserwertstoffe vorzugsweise in einem weiteren Schritt getrocknet werden.

15. Vorrichtung zur Durchführung eines Verfahrens nach einem der vorhergehenden Ansprüche mit einem Hydrothermalreaktor (14),
**dadurch gekennzeichnet,**
**dass** in Prozessrichtung (X) vor dem als Druckreaktor ausgebildeten Hydrothermalreaktor (14) eine Zerkleinerungseinrichtung (10) und eine dieser nachgeordnete Mischeinrichtung (12) vorgesehen sind, wobei zwischen der Zerkleinerungseinrichtung (12) und der Mischeinrichtung (12) eine erste Transporteinrichtung (11, 13; 13') vorgesehen ist und wobei zwischen der Mischeinrichtung (12) und dem Hydrothermalreaktor (14) eine zweite Transporteinrichtung (15) vorgesehen ist;
**dass** die zweite Transporteinrichtung (15) in den Hydrothermalreaktor (14) in einem Einlass (14') für die künstliche Mineralfasern enthaltende Pulpe mündet und
**dass** der Hydrothermalreaktor (14) eine Dampfablasseinrichtung (D) und eine Spülfluid-Zuführeinrichtung (K) sowie einen Auslass (14"") für die Pulpe aufweist.

16. Vorrichtung zur kontinuierlichen Durchführung eines Verfahrens nach einem der vorhergehenden Ansprüche mit einem Hydrothermalreaktor (114; 214), **dadurch gekennzeichnet,**
**dass** in Prozessrichtung (X) vor dem als Druckreaktor ausgebildeten Hydrothermalreaktor (114; 214) eine Zerkleinerungseinrichtung (10) und eine dieser nachgeordnete Mischeinrichtung (12) vorgesehen sind, wobei zwischen der Zerkleinerungseinrichtung (10) und der Mischeinrichtung (12) eine erste Transporteinrichtung (11, 13; 13') vorgesehen ist und wobei zwischen der Mischeinrichtung (12) und dem Hydrothermalreaktor (114; 214) eine zweite Transporteinrichtung (15) vorgesehen ist;
**dass** zwischen der Mischeinrichtung (12) und dem Hydrothermalreaktor (114; 214) eine einlassseitige Druckschleuse (16) vorgesehen ist;
**dass** in Prozessrichtung (X) hinter dem Hydrothermalreaktor (114; 214) ein mit einer Dampfablasseinrichtung (D) versehener Dekompressionsbehälter (18) vorgesehen ist, der über eine dritte Transporteinrichtung (17) mit dem Hydrothermalreaktor (114; 214) verbunden ist, und
**dass** zwischen dem Hydrothermalreaktor (114; 214) und dem Dekompressionsbehälter (18) eine auslassseitige Druckschleuse (16') vorgesehen ist.

17. Vorrichtung nach Anspruch 16,
**dadurch gekennzeichnet,**
**dass** der Dekompressionsbehälter (18) oder ein in Prozessrichtung (X) hinter dem Dekompressionsbehälter (18) vorgesehener und mit diesem über eine vierte Transporteinrichtung (19') verbundener Abkühlbehälter (19) eine Spülfluid-Zuführeinrichtung (K) sowie einen Auslass für die Pulpe aufweist.

18. Vorrichtung nach einem der Ansprüche 15 bis 17,
**dadurch gekennzeichnet,**
**dass** in Prozessrichtung (X) hinter dem Hydrothermalreaktor (14; 114; 214) oder hinter dem Dekompressionsbehälter (18) oder hinter dem Abkühlbehälter (19) eine Mahleinrichtung (20) für die im Schritt f) abgekühlte Pulpe vorgesehen ist.

19. Vorrichtung nach einem der Ansprüche 15 bis 18,
**dadurch gekennzeichnet,**
**dass** der Hydrothermalreaktor (14; 114; 214) eine, vorzugsweise interne, Heizeinrichtung (14‴) aufweist.

20. Vorrichtung nach einem der Ansprüche 15 bis 19,
**dadurch gekennzeichnet,**
**dass** der Hydrothermalreaktor (14; 114; 214) eine Agitationseinrichtung (14") für die Pulpe, vorzugsweise ein Rührwerk, aufweist.
